# EUROPÄISCHE PATENTSCHRIFT

(11) **EP 4 165 961 B1**
(45) Veröffentlichungstag und Bekanntmachung des Hinweises auf die Patenterteilung: **08.05.2024**
(21) Anmeldenummer: 22184841.9
(22) Anmeldetag: 14.07.2022
(51) Int. Cl.: A01B 3/421, A01B 15/14

(54) **ANBAUDREHPFLUG**
MOUNTED REVERSIBLE PLOUGH
CHARRUE RÉVERSIBLE PORTÉE

(30) Priorität: 13.10.2021 DE 102021126501
(43) Veröffentlichungstag der Anmeldung: 19.04.2023
(73) Patentinhaber: Pöttinger Landtechnik GmbH, 4710 Grieskirchen (AT)
(72) Erfinder: SEYFRIED, Josef, 4710 Grieskirchen (AT)
(74) Vertreter: Thoma, Michael

(56) Entgegenhaltungen:
- EP-A1- 3 884 743
- EP-B1- 3 427 559
- DE-A1-102019 116 732
- DE-U1-202011 101 162

## Beschreibung

Die vorliegende Erfindung betrifft einen Anbaudrehpflug mit einem Anbaubock zum Anbau an einen Schlepper, einem Pflugrahmen, der zwei Pflugscharreihen trägt und um eine liegende Wendeachse drehbar ist, wobei die Pflugscharreihen durch einen Schnittbreitenaktor in ihrer Schnittbreite verstellbar sind und der Pflugrahmen an einem Wendebock, der um die genannte liegende Wendeachse schwenkbar am Anbaubock gelagert ist, um eine Einschwenkachse quer zur Wendeachse einschwenkbar gelagert und durch einen druckmittelbetätigten Einschwenkzylinder für den Wendevorgang in eine Wendestellung mit verringerter Querausladung einschwenkbar ist, wobei der Einschwenkzylinder für verschiedene Schnittbreiten in verschiedene Hubstellungen zum Erreichen der gewünschten Wendestellung steuerbar ist.

Bei mehrscharigen Dreh- bzw. Wendepflügen mit größerer Arbeitsbreite erstreckt sich der längliche Pflugrahmen üblicherweise mehr oder minder schräg zur liegenden Wendeachse, die sich üblicherweise liegend in Fahrtrichtung erstreckt. Wird der Pflugrahmen im Vorgewende um die genannte Wendeachse gedreht, um für die nächste Fahrgasse die zuvor nicht benutzte Pflugscharreihe in Arbeitsstellung zu bringen, kommt es durch den schrägstehenden Pflugrahmen zu einer ausgreifenden, viel Platz benötigenden Wendebewegung. Je schräger sich der Pflugrahmen zur Wendeachse erstreckt, desto größer wird der Abstand der am hinteren Ende des Pflugrahmens befestigten Pflugschare von der Wendeachse, sodass sich einerseits ein großer Hebelarm und damit ein großes Wendemoment ergibt, das zu starken Beanspruchungen der Anlenk- und Lagerstruktur des Pflugs führt und hohe Stellkräfte des Wendeaktors benötigt. Andererseits ergeben sich Probleme hinsichtlich der Bodenfreiheit, da es zu stark ausgreifenden Bewegungen kommt, was einerseits zu einem Einstechen in den Boden oder andererseits zum Anschlagen an seitlichen Begrenzungen führen kann.

Es wurde deshalb bereits vorgeschlagen, den Pflugrahmen für den Wendevorgang oder auch zum Zwecke des Transports um eine Einschwenkachse quer zur Wendeachse einzuschwenken, um den Pflugrahmen näher an die Wendeachse zu bringen bzw. die Ausladung quer zur Wendeachse zu verringern, was im Wesentlichen dadurch erreicht wird, dass der Schrägstellungswinkel des länglichen Pflugrahmens gegenüber der Wendeachse verkleinert wird, vgl. EP 3 884 743 A1, DE 20 2011 101 162 U1 und DE 10 2019 116 732 A1. Je nach Aufhängung bzw. Anlenkung des Pflugrahmens bspw. über eine Mehrgelenksstruktur kann dies auch eine Querbewegung des Pflugrahmens beinhalten, die den Pflugrahmen und die daran angebauten Pflugscharreihen näher in das Zentrum der Wendebewegung bringt.

Für das Einschwenken des Pflugrahmens vor dem bzw. für den Wendevorgang können Einschwenkzylinder oder andere Druckmittelaktoren Verwendung finden, die den Pflugrahmen gegenüber dem Wendebock Fremdenergie hydraulisch bzw. druckmittelbetätigt einschwenken. Dabei wurde bspw. bereits vorgeschlagen, den Einschwenkzylinder an die Druckmittelbetätigung des Wendezylinders anzukoppeln, sodass bei Druckmittelbeaufschlagung des Wendezylinders auch der Einschwenkzylinder betätigt wird.

Ein Problem hierbei ergibt sich, wenn der Drehpflug eine Schnittbreitenverstellung besitzt, wie dies bei moderneren Drehpflügen regelmäßig der Fall ist. Durch den Schnittbreitenaktor können die Pflugschare in ihrer Schnittbreite verstellt werden, was bspw. eine Verstellung der Schrägstellung des Pflugrahmens und/oder der Pflugschare zur Fahrtrichtung beinhaltet kann. Je nachdem, in welcher Schnitt- bzw. Arbeitsbreite der Pflug gefahren wird, muss der vorgenannte Einschwenkzylinder unterschiedliche Stellwege zurücklegen, um den Pflugrahmen in die gewünschte Wendestellung zu verbringen, da der Einschwenkaktor den Pflugrahmen hierzu unterschiedlich weit verschwenken muss.

Um die gewünschte Wendestellung anfahren zu können, ist es bislang üblich, den Einschwenkzylinder gegen Anschläge fahren zu lassen, die eine jeweilige Endstellung des Einschwenkaktors mechanisch vorgeben. Die Anschläge können dabei verstellt werden, um je nach Schnittbreite die benötigte Hubendstellung des Einschwenkaktors passend einstellen zu können. Bei hydraulischer Schnittbreitenverstellung, die eine häufigere Verstellung zulässt, ist dies jedoch mühsam, da jedes Mal die Anschläge neu eingestellt werden müssten, wenn die Schnittbreite verstellt wird.

In der Schrift WO 2014/067508 A1 wurde deshalb vorgeschlagen, die die Endstellung der Einschwenkbewegung begrenzenden Anschläge nicht mehr direkt am Einschwenkzylinder anzubringen bzw. in diesen zu integrieren, sondern die Einschwenkbegrenzung mittels einer Langlochstange zu realisieren, die in die Lenkeraufhängung des Pflugrahmens integriert ist und über ihr Langloch eine Schnittbreitenverstellung zulässt, gleichzeitig aber über die stirnseitigen Enden des Langlochs die Einschwenkstellung für den Wendevorgang vorgibt. Der besagte Langlochlenker dient hierbei als Begrenzungsanschlag für die Einschwenkbewegung, die für den Wendevorgang vorgenommen wird. Die Belastungen an diesem Langlochlenker sind jedoch weiterhin recht hoch. Zudem ist das gesamte Einlenkgetriebe relativ komplex.

Um das harte Anschlagen an mechanischen Anschlägen zu vermeiden, wurde auch bereits vorgeschlagen, den Einschwenkzylinder mittels eines Ventils in der gewünschten Einschwenkstellung abzusperren und sozusagen hydraulisch zu verriegeln. Dabei kann das Sperrventil sensorisch angesteuert oder mithilfe eines Koppelgelenks oder Seilzugs betätigt werden, wenn die für den Wendevorgang gewünschte Einschwenkstellung erreicht ist, wodurch auch bei verschieden eingestellten Pflugparametern wie Schnittbreite oder Zugpunkt der Rahmen für den Wendevorgang ausreichend weit eingeschwenkt wird, andererseits aber keine Kollisionen eintreten, vgl. beispielsweise EP 34 27 559 B1 und WO 2020/250176 A1.

Weiterhin wurde bereits vorgeschlagen, die Einschwenkbewegung nicht mittels eines separaten Einschwenkaktors zu bewerkstelligen, sondern über eine gesteuerte Bewegung des Schnittbreitenaktors. Hierbei werden jedoch sämtliche Schnittbreitengelenke bewegt. Zudem muss nach dem Wendevorgang die Schnittbreitenverstellung wieder zurück in ihre Arbeitsstellung gefahren werden, wozu sich die Schnittbreiten-Steuervorrichtung die zuvor verlassene Stellung gemerkt haben muss und eine relativ komplexe, hydraulische Ansteuerung des Schnittbreitenaktors erforderlich ist.

Hiervon ausgehend liegt der vorliegenden Erfindung die Aufgabe zugrunde, einen verbesserten Anbaudrehpflug der genannten Art zu schaffen, der Nachteile des Standes der Technik vermeidet und letzteren in vorteilhafter Weise weiterbildet. Insbesondere soll ein auch bei verschiedenen Schnittbreiteneinstellungen einfach auszuführendes Einschwenken des Pflugrahmens für den Wendevorgang ermöglicht werden.

Diese Aufgabe wird durch einen Anbaudrehpflug gemäß Anspruch 1 gelöst. Bevorzugte Ausgestaltungen der Erfindung sind Gegenstand der abhängigen Ansprüche.

Es wird also vorgeschlagen, die eingeschwenkte Wendestellung des Einschwenkzylinders hydraulisch bzw. druckmittelgesteuert vorzugeben und den Stellweg des Einschwenkzylinders durch Volumenänderung einer Einstellkammer an die eingestellte Schnittbreite anzupassen, um Kollisionen zu verhindern, gleichzeitig jedoch eine für den Wendevorgang ausreichende Einschwenkbewegung zu erzielen. Erfindungsgemäß besitzt der Einschwenkzylinder zusätzlich zu einem Arbeitskolben zum Einschwenken des Pflugrahmens in die Wendestellung einen Schwimmkolben zum Begrenzen des Hubs des Arbeitskolbens zum Einstellen der Wendestellung, wobei eine Einstellkammer zum Einstellen der Schwimmkolbenlage relativ zum Arbeitskolben oder zu einem Kolbenboden vorgesehen ist, deren Befüllung mit Druckmittel von einer Schwimmkolbensteuerung in Abhängigkeit der Einstellung des Schnittbreitenaktors gesteuert ist.

Der genannte Schwimmkolben kann den Stellweg des Arbeitskolbens begrenzen und als hydraulischer Anschlag eine Endstellung des Arbeitskolbens vorgeben, die der Arbeitskolben anfährt, um den Pflugrahmen in die Wendestellung einzufahren. Dabei kann die Stellung des Schwimmkolbens variabel an die jeweils eingestellte Schnittbreite angepasst werden, indem die in der Einstellkammer befindliche Druckmittelmenge variiert und an die jeweilige Schnittbreiteneinstellung angepasst wird.

Durch den in den Einschwenkzylinder integrierten Schwimmkolben und das hydraulische Einstellen seiner Schwimmlage zum variablen Vorgeben der Einschwenkstellung für den Wendevorgang können aufwendige Steuergestänge, Seilzugmechanismen und Sperrventilschaltungen zum Blockieren des Einschwenkzylinders in verschiedenen Stellungen eingespart bzw. weggelassen werden. Gleichzeitig können die starken mechanischen Belastungen bisheriger Lösungen und das harte Anfahren an mechanische Anschläge vermieden bzw. gemildert werden, da der Schwimmkolben und das Druckmittelpolster in der Einstellkammer eine gewisse Dämpfungswirkung haben.

Die Schwimmkolbensteuerung, die die Druckmittelmenge in der Einstellkammer und damit die Schwimmlage des Schwimmkolbens ändert, kann in Weiterbildung der Erfindung eine hydraulische Kopplung zwischen der Einstellkammer im Einschwenkzylinder und dem Schnittbreitenaktor umfassen, sodass aus dem Schnittbreitenaktor verdrängtes Druckmittel eine Befüllung der Einstellkammer des Einschwenkzylinders mit Druckmittel erzwingt. Wird die Schnittbreite verändert und aus einer Druckmittelkammer des Schnittbreitenaktors eine entsprechende Menge Druckmittel verdrängt, kann das aus dem Schnittbreitenaktor verdrängte Druckmittel in eine Befüllung der Einstellkammer des Einschwenkzylinders umgewandelt werden, um den Einschwenkweg des Einschwenkzylinders an die veränderte Schnittbreite anzupassen. Üblicherweise wird die Schnittbreite für eine Feldbearbeitung einmal eingestellt und nicht bei jedem Wendevorgang verändert, sodass anders als bei Lösungen mit Betätigung eines Sperrventils oder einem Verkleinern der Schnittbreite für jeden Wendevorgang auch der Schwimmkolben an sich nur einmal für eine Feldbearbeitung in eine bestimmte Stellung gefahren werden muss und nicht für jeden Wendevorgang die Schwimmkolbeneinstellung neu manipuliert werden muss.

Insbesondere kann die hydraulische Kopplung der Einstellkammer des Schwimmkolbens an den Schnittbreitenaktor eine direkte Strömungsverbindung zwischen einer Druckkammer des Schnittbreitenaktors und der Einstellkammer vorsehen, sodass bei Verstellung des Schnittbreitenaktors aus der Druckmittelkammer des Schnittbreitenaktors verdrängtes Druckmittel direkt in die Einstellkammer des Einschwenkzylinders einströmt und hierdurch den Einschwenkweg an die Schnittbreitenverstellung anpasst.

Alternativ zu einer solchen direkten hydraulischen Strömungsverbindung wäre es auch möglich, einen Steuerzylinder zwischenzuschalten bzw. in der hydraulischen Kopplung vorzusehen, beispielsweise dergestalt, dass aus dem Schnittbreitenaktor verdrängtes Druckmittel in eine Kammer des Steuerzylinders strömt, um einen Steuerkolben zu verstellen, dessen Stellweg dann Druckmittel aus einer anderen Steuerkammer verdrängt und in den Einschwenkzylinder bzw. dessen Einstellkammer für den Schwimmkolben treibt. Durch einen solchen Steuerzylinder können verschiedene hydraulische Übersetzungsverhältnisse unabhängig vom Größenverhältnis der Schnittbreiten- und Einschwenkzylinder hergestellt werden, beispielsweise dergestalt, dass ein kleinerer Stellweg des Schnittbreitenzylinders in eine größere Anpassung des Stellwegs des Einschwenkzylinders oder umgekehrt eine größere Schnittbreitenverstellung in eine kleinere Anpassung des Einschwenkwegs umgesetzt wird.

Bei einer direkten Strömungsverbindung des Schnittbreitenaktors mit der Einstellkammer des Schwimmkolbens kann jedoch eine besonders einfache Ausbildung des Hydrauliksystems erzielt werden, wobei auch hierdurch eine geschickte Wahl des Verhältnisses der Kammerdurchmesser, also der Querschnittsfläche der Druckkammer des Schnittbreitenzylinders und der Querschnittsfläche der Einstellkammer des Einschwenkzylinders, eine passende Anpassung des Stellwegs des Einschwenkzylinders an Schnittbreitenverstellungen erreicht werden. Vorteilhafterweise kann beispielsweise ein 1:1-Querschnittsflächenverhältnis vorgesehen sein dergestalt, dass ein Verstellweg des Schnittbreitenzylinders 1:1 in eine Verschiebung des Schwimmkolbens umgesetzt und eine entsprechende Anpassung des Stellwegs des Einschwenkzylinders umgesetzt wird.

Alternativ oder zusätzlich zu einer hydraulischen Ankopplung an den Schnittbreitenzylinder wäre es auch möglich, die Befüllung der Einstellkammer des Einschwenkzylinders sensorisch in anderer Weise zu steuern, beispielsweise in Abhängigkeit eines Signals eines Schnittbreitensensors, der die Schnittbreiteneinstellung erfasst, und/oder in Abhängigkeit eines Signals eines Einschwenksensors, der die Einschwenkbewegung des Pflugrahmens erfasst und auf etwaige Kollisionen überwacht. Das jeweilige Sensorsignal kann dabei an eine elektronische Steuereinrichtung übertragen werden, die ein hydraulisches Steuerungselement wie beispielsweise eine Pumpe oder ein Ventil ansteuert, um die Druckmittelmenge in der Einstellkammer entsprechend anzupassen.

Insbesondere kann die Einstellkammer des Einschwenkzylinders derart an den Schnittbreitenaktor angebunden sein, dass eine Verkleinerung der Schnittbreite bzw. eine Verstellung des Schnittbreitenaktors zum Verkleinern der Schnittbreite mit einer Verkürzung des Stellwegs des Einschwenkzylinders einhergeht. Wird die Schnittbreite kleiner eingestellt, was an sich das Kollisionsrisiko beim Einschwenken erhöhen würde, wird der Schwimmkolben so verstellt, dass der Arbeitskolben des Einschwenkzylinders früher stehen bleibt bzw. seine Endstellung, die der Einschwenkstellung für den Wendevorgang entspricht, früher erreicht.

Allgemeiner kann die Schwimmkolbensteuerung derart ausgebildet sein, dass bei einer Verkleinerung der Schnittbreite eine größere Druckmittelmenge in die Einstellkammer gegeben wird, um den Stellweg des Einschwenkzylinders zu verkürzen, und/oder bei einer Vergrößerung der Schnittbreite eine kleinere Druckmittelmenge in die Einstellkammer gegeben bzw. ein Teil des dort befindlichen Druckmittels entleert wird, um dem Arbeitskolben des Einstellzylinders einen größeren Stellweg und damit dem Pflugrahmen einen größeren Einschwenkweg zu geben.

In Weiterbildung der Erfindung kann die Arbeitskammer des Schnittbreitenzylinders, aus der beim Verkleinern der Schnittbreite Druckmittel verdrängt wird, direkt mit der genannten Einstellkammer zum Einstellen der Schwimmkolbenlage strömungsverbunden sein, sodass die Einstellkammer beim Verkleinern der Schnittbreite entsprechend vergrößert und hierdurch der Stellweg des Arbeitskolbens des Einschwenkzylinders verkürzt wird.

Insbesondere kann die Schwimmkolbensteuerung derart ausgebildet sein, dass der Gesamthub beim Wenden zusammengesetzt aus dem eingestellten Hub des Schnittbreitenzylinders und dem Einschwenkhub des Einschwenkzylinders gleichbleibt. Wird der Schnittbreitenzylinder verlängert, wird der Einschwenkzylinder bzw. dessen Stellweg verkürzt. Wird umgekehrt der Schnittbreitenzylinder verkürzt, kann der Einschwenkzylinder einen längeren Weg fahren.

Der genannte Schwimmkolben kann vorteilhafterweise ein Ringkolben sein, der auf der Kolbenstange des Arbeitskolbens schwimmt und die Ringkammer des Einschwenkzylinders sozusagen unterteilt in eine Arbeitskammer zum Einfahren des Einschwenkzylinders und eine Einstellkammer zum Einstellen der Schwimmlage des Schwimmkolbens. Die der Kolbenstange gegenüberliegende Vollquerschnittskammer des Einschwenkzylinders kann den Einschwenkzylinder bzw. dessen Kolbenstange ausfahren, um den Pflugrahmen für den Wendevorgang einzuschwenken, wobei der Schwimmkolben und die in der Einstellkammer befindliche Druckmittelmenge den maximalen Stellweg des Arbeitskolbens vorgibt und beschränkt, sodass die Wendestellung des Pflugrahmens entsprechend vorgegeben ist.

Die beiden Ringkammern des Einschwenkzylinders, die durch den Schwimmkolben voneinander abgegrenzt sind, können hinsichtlich ihrer Funktion unterschiedlich gewählt werden. Beispielsweise kann die zwischen dem Arbeitskolben und dem Schwimmkolben liegende Ringkammer als Einstellkammer dienen, wobei in diesem Fall eine Befüllung der Einstellkammer über einen Kanal in der Kolbenstange erfolgen kann. Insbesondere kann das aus dem Schnittbreitenzylinder verdrängte Druckmittel über einen Kanal in der Kolbenstange in die Einstellkammer geleitet werden. In diesem Fall kann die Ringkammer zwischen Schwimmkolben und Zylinderboden eine Arbeitskammer bilden, über die der Arbeitskolben sozusagen indirekt über den Schwimmkolben und die Einstellkammer eingefahren werden kann, wenn die genannte Ringkammer zwischen Schwimmkolben und Zylinderboden mit Druckmittel befüllt wird.

Alternativ kann aber auch die Ringkammer zwischen Schwimmkolben und Zylinderboden als Einstellkammer zum Einstellen der Schwimmkolbenlage dienen, wobei dann die Ringkammer zwischen Schwimmkolben und Arbeitskolben als Arbeitskammer dient, um den Arbeitskolben vom Schwimmkolben wegzudrücken und einzufahren. Ist die Ringkammer zwischen Schwimmkolben und Zylinderboden die Einstellkammer, kann eine einfache Anbindung der Einstellkammer an den Schnittbreitenzylinder erfolgen. Ein Druckmittelkanal kann durch den Zylindermantel hindurch oder auch durch den Zylinderboden hindurch in die Einstellkammer münden, um aus dem Schnittbreitenzylinder verdrängtes Druckmittel in die Einstellkammer geben zu können.

Durch die Einstellbarkeit des Verstellwegs des Einschwenkzylinders über den genannten Schwimmkolben kann die passende Wendestellung des Pflugrahmens eingeschwenkt werden, auch wenn der Pflug weitere Einstellmöglichkeiten besitzt, wie z. B. Schnittbreite, Vorfurchenbreite oder Zugpunkt der Pflugrahmen für den Wendevorgang und/oder für den Transport in eine jeweils gewünschte Wendestellung eingeschwenkt und der Einschwenkaktor in die hierzu erforderliche Hubstellung gefahren werden.

Die hydraulische bzw. druckmittelbasierte Schwimmkolbensteuerung in Abhängigkeit der Schnittbreiteneinstellung ist insbesondere für komplexer verstellbare Drehpflüge bestens geeignet, bei denen verschiedene Einstellmöglichkeiten gegeben sind und der Pflugrahmen über ein komplexeres Anlenkgetriebe am Wendebock angelenkt ist, da über die hydraulische Schwimmkolbenstellung der Stellweg des Einschwenkzylinders und damit die gewünschte Wendestellung des Pflugrahmens leicht an variierende Voreinstellungen diverser Pflugparameter angepasst werden kann, ohne dass es notwendig wäre, diese diversen Pflugparameter für das Anfahren der Wendestellung zu verstellen und nach dem Wenden wieder zurückzufahren.

Insbesondere kann der Pflugrahmen über ein mehrgelenkiges Anlenkgetriebe am Wendebock angelenkt sein, welches Anlenkgetriebe zusätzlich zu dem Einschwenkaktor zumindest einen weiteren, davon beabstandeten Anlenkträger umfassen kann, der einerseits gelenkig am Wendebock und andererseits gelenkig am Pflugrahmen oder einem Zwischenrahmen angelenkt sein kann. Beispielsweise kann der genannte Anlenkträger zusammen mit dem Einschwenkaktor einen Gelenkabschnitt nach Art eines Viergelenks bilden, sodass eine Verstellung des Einschwenkaktors eine Verstellung des genannten Viergelenksabschnitts bewirkt. An dem genannten Viergelenksabschnitt kann der Pflugrahmen wiederum schwenkbar angelenkt sein und über weitere Verstellaktoren verschwenkt werden, beispielsweise über einen Vorfurchenaktor und/oder einen Schnittbreitenaktor und/oder einen Zugpunktaktor.

Vorteilhafterweise kann der Einschwenkaktor passend für verschiedene Stellungen der genannten weiteren Verstellaktoren betätigt werden, um den Pflugrahmen in die Wendestellung einschwenken zu können, ohne hierfür die weiteren Stellaktoren wie den genannten Schnittbreitenaktor, den Vorfurchenaktor oder den Zugpunktaktor verstellen zu müssen.

Der genannte Einschwenkaktor kann vorteilhafterweise an die Druckmittelversorgung des Wendeaktors, mittels dessen der Pflug gewendet werden kann, angebunden sein, insbesondere derart dass der Einschwenkaktor mit Druckmittel beaufschlagt wird, wenn Druck auf den Wendezylinder gegeben wird. Eine solche an den Wendezylinder - bzw. aktor angebundene Druckmittelbeaufschlagung des Einschwenkaktors kann bspw. dergestalt ausgebildet sein, dass das an sich für den Wendezylinder bestimmte Druckmittel erst in den Wendezylinder gegeben wird, wenn am Einschwenkzylinder ein vorbestimmtes Druckniveau erreicht wird, genauer gesagt an dem Sperrventil, das dem Einschwenkzylinder vorgeschaltet ist, da natürlich kein Druckmittel mehr in den Einschwenkzylinder gelangen soll, sobald das Sperrventil abgesperrt ist, nachdem der Pflugrahmen seine gewünschte Wendestellung erreicht hat.

Die Erfindung wird nachfolgend anhand eines bevorzugten Ausführungsbeispiels und zugehörigen Zeichnungen näher erläutert. In den Zeichnungen zeigen:
- Fig. 1:: eine schematische Draufsicht auf einen Anbaudrehpflug, die dessen Anlenkung an den Wendebock einer Anbauvorrichtung und die sich ergebenden Einstellmöglichkeiten zeigt, wobei der Schnittbreitenzylinder in einer eingefahrenen Stellung zum Einstellen einer kleinen Schnittbreite zum Einstellen einer kleinen Schnittbreite gezeigt ist, so dass der Einschwenkzylinder ohne Korrektur durch einen Schwimmkolben den Pflugrahmen zu weit verschwenken und eine Kollision drohen würde,
- Fig. 2:: eine Draufsicht auf den Anbaudrehpflug aus Fig. 1, wobei der Schnittbreitenzylinder ausgefahren und damit eine geringe Schnittbreite eingestellt ist, wobei der Einschwenkzylinder in seinem Hub entsprechend dem Hub des Schnittbreitenzylinders reduziert ist, um eine Kollision zu verhindern,
- Fig. 3:: eine Draufsicht auf den Anbaudrehpflug aus den vorhergehenden Figuren, wobei der Schnittbreitenzylinder eingefahren und damit eine große Schnittbreite eingestellt ist, so dass der Einschwenkzylinder den vollen Hub fahren und den Rahmen für den Wendevorgang vollends einschwenken kann, und
- Fig. 4:: einen Hydraulikschaltplan der Kopplung der Schnittbreiten- und Einschwenkzylinder des Anbaudrehpflugs aus den vorhergehenden Figuren.

Der in den Figuren gezeigte Anbaudrehpflug 1 besitzt in an sich bekannter Weise einen Anbaubock 2, der bspw. über eine Dreipunktanlenkung mit Ober- und Unterlenkern an einem nicht gezeigten Schlepper anbaubar sein kann.

Der Anbaubock 2 trägt einen Pflugrahmen 3, an dem zwei Reihen von Pflugscharen 4 befestigt sind, wobei der genannte Pflugrahmen 3 zusammen mit den Pflugscharreihen um eine liegende, in Fahrtrichtung weisende Wendeachse 5 gegenüber dem Anbaubock 2 verdreht und damit gewendet werden kann, um wechselweise mit der einen Pflugscharreihe oder der anderen Pflugscharreihe pflügen zu können.

Um den Pflug wenden zu können, ist an dem Anbaubock 2 ein Wendebock 6 um die genannte Wendeachse 5 drehbar befestigt, wobei der Wendebock 6 mittels eines Wendeaktors 7 bspw. in Form eines Hydraulikzylinders gewendet werden kann, wobei der Wendebock 6 im Wesentlichen um 180° verdreht werden kann.

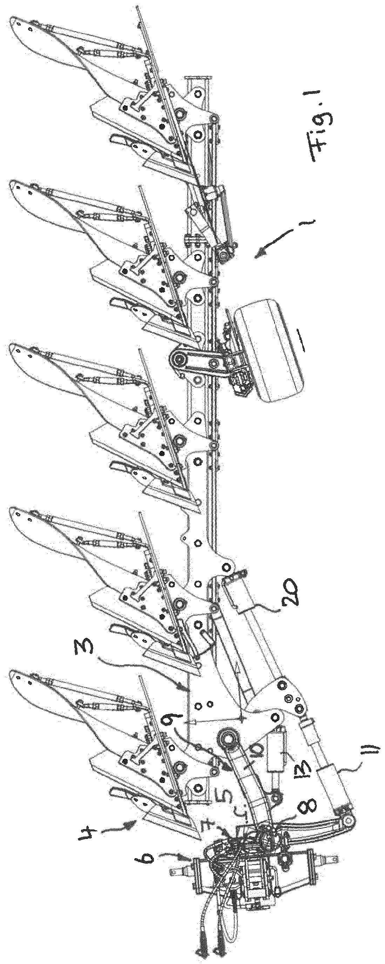

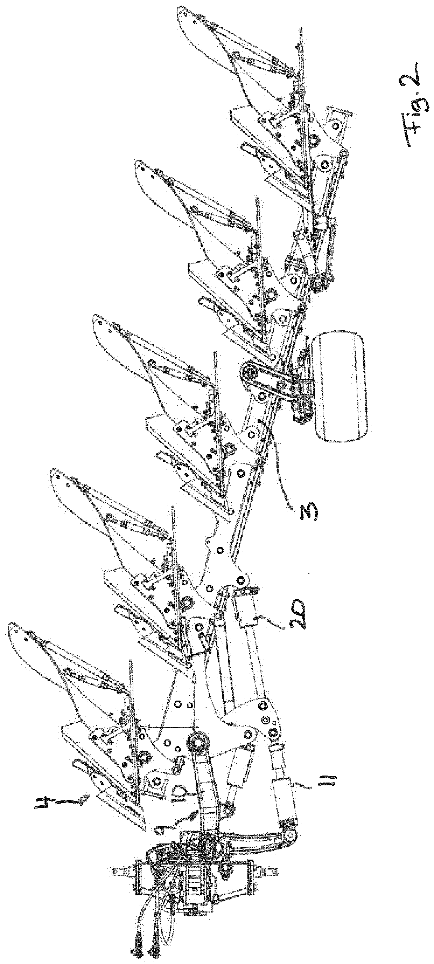

An dem Wendebock 6 ist der Pflugrahmen 3 aufgehängt und verstellbar angelenkt, wie noch erläutert wird, wobei der insgesamt längliche, insbesondere trägerförmige Pflugrahmen 3 in seinen Arbeitsstellungen jeweils schräg, insbesondere spitzwinklig zur Wendeachse 5 geneigt angestellt ist, vgl. Figur 1 und Figur 2. Um den Pflug für den Wendevorgang handlicher zu machen und das aufzubringende Wendemoment zu begrenzen, kann der Pflugrahmen 3 um eine Einschwenkachse 8 in eine weniger schräg angestellte Wendestellung verbracht werden, sodass sich der Pflugrahmen 3 näher an der Wendeachse 5 erstreckt. Je nach Aufhängungsausbildung kann die genannte Einschwenkachse 8 eine räumlich relativ zum Wendebock 6 feststehende Achse oder auch eine wandernde Achse sein, die nach Art eines Momentandrehpols ihre Position relativ zum Wendebock 6 ändern kann. Die genannte Einschwenkachse 8 erstreckt sich hierbei aber quer zur Wendeachse 5, wobei die genannte Einschwenkachse 8 in den in den Figuren gezeigten Arbeitsstellungen aufrecht bzw. näherungsweise senkrecht ausgerichtet sein kann.

Wie die Figuren zeigen, kann der Pflugrahmen 3 über ein mehrgelenkiges Anlenkgetriebe 9 an dem Wendebock 6 aufgehängt sein, wobei das Anlenkgetriebe 9 einen Anlenkträger 10 umfassen kann, der einerseits gelenkig um eine Schwenkachse parallel zur Einschwenkachse 8 an dem Wendebock 6 und andererseits gelenkig um eine Achse parallel zur Einschwenkachse 8 an dem Pflugrahmen 3 bzw. einem damit verbundenen Zwischenrahmen angelenkt sein kann. Zusammen mit dem genannten Anlenkträger 10 kann ein hiervon beabstandeter Einschwenkaktor 11 bspw. in Form eines Hydraulikzylinders ein Viergelenk bilden, über das der Pflugrahmen 3 bzw. der damit verbundene Zwischenrahmen gegenüber dem Wendebock 6 verschwenkbar ist, wenn der genannte Einschwenkaktor 11 verstellt wird.

Wie die Figuren weiterhin zeigen, kann der Pflugrahmen 3 unabhängig von dem Einschwenkaktor 11 über weitere Gelenkigkeiten und Stellaktoren verstellt werden. Beispielsweise kann über einen Vorfurchenaktor und/oder einen Zugpunktaktor 13 die Schwenkstellung des Pflugrahmens 3 gegenüber dem genannten Zwischenrahmen 14 und/oder das zuvor genannte Viergelenk in sich weiter verstellt werden. Ein Schnittbreitenaktor 20 kann weiterhin die Schwenkstellung der Pflugschare 4 gegenüber dem Pflugrahmen 3 verstellen, um die Schnittbreite zu variieren.

Je nachdem, wie der Schnittbreitenaktor 20 und ggf. weitere Aktoren 13 eingestellt sind, kann es notwendig werden, den Einschwenkaktor 11 weniger weiter oder weiter zu verstellen, um den Pflugrahmen 3 in die gewünschte Wendestellung zu verbringen. Um die jeweils gewünschte Wendestellung anzufahren, wird der genannte Einschwenkaktor 11 ausgefahren, sodass der Pflugrahmen 4 über das Anlenkgetriebe 9 um die Einschwenkachse 8 eingeschwenkt wird, um die Ausladung bezüglich der Wendeachse 5 zu verringern.

Insbesondere kann der Stellweg des Einschwenkaktors 11 automatisch an die Einstellung des Schnittbreitenaktors 20 angepasst werden, um bei kleinen Schnittbreiten eine Kollision der Pflugschare bzw. des Pflugrahmens mit dem Anbau- bzw. Wendebock zu vermeiden, wenn der Pflugrahmen für den Wendevorgang eingeschwenkt wird, andererseits aber nichtsdestotrotz eine möglichst weite Einschwenkung vorzusehen, um die Bodenfreiheit zu erhöhen und den Pflug in der Ausladung um die Wendeachse möglichst klein zu machen.

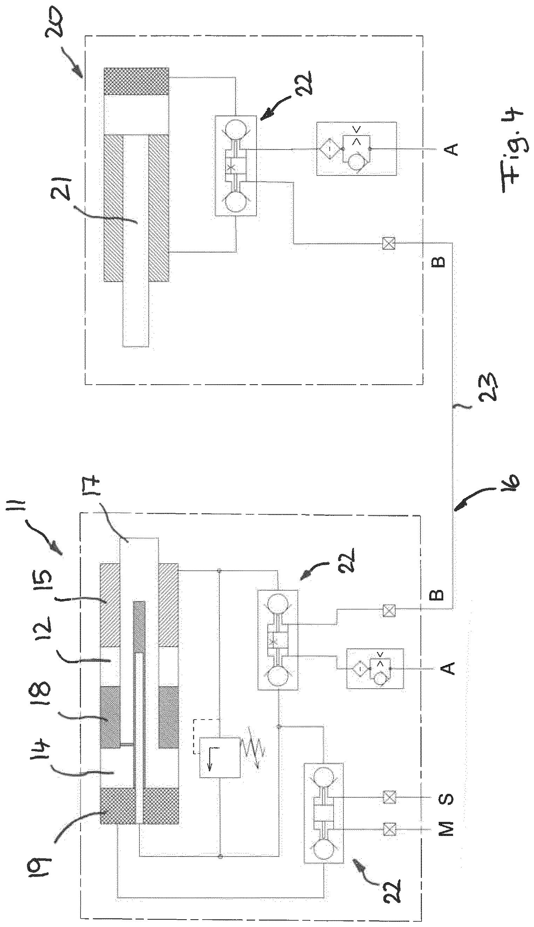

Wie Fig. 4 zeigt, kann der Stellweg bzw. die Endposition des Einschwenkzylinders 11 mittels eines Schwimmkolbens 12 variabel eingestellt werden, der im Einschwenkzylinder 11 zusätzlich zu dessen Arbeitskolben 14 vorgesehen ist. Um die Schwimmstellung des genannten Schwimmkolbens 12 relativ zum Arbeitskolben 14 und/oder zu einem Zylinderboden des Einschwenkzylinders 11 verändern zu können, ist eine Einstellkammer 15 vorgesehen, die zwischen dem Schwimmkolben 12 und einem Zylinderboden auf der abgewandten Seite des Arbeitskolbens vorgesehen sein kann, vgl. Fig. 4, wobei es grundsätzlich aber auch möglich wäre, die Kammer zwischen dem Schwimmkolben 12 und dem Arbeitskolben 14 als Einstellkammer 15 zu nutzen.

Der Schwimmkolben 12 bildet dabei sozusagen einen Anschlag, gegen den der Arbeitskolben 14 anfährt, wenn der Einschwenkzylinder 11 die Wendestellung des Pflugrahmens erreicht bzw. hergestellt hat. Je größer die Druckmittelmenge in der Einstellkammer 15 ist uns sozusagen das Volumen der Einstellkammer 15 vergrößert wird, desto kleiner wird der Stellweg des Einschwenkzylinders 11 und desto früher wird die Wendestellung erreicht. Dementsprechend kann die Schwimmkolbensteuerung 16 die Schwimmkolbenlage relativ zum Zylinderboden dadurch steuern, dass in die Einstellkammer 15 mehr oder weniger Druckvolumen gegeben wird.

Der Schwimmkolben 12 kann dabei vorteilhafterweise ein Ringkolben sein, der verschieblich auf der Kolbenstange 17 des Einschwenkzylinders 11 sitzen und die um die Kolbenstange 17 herum gebildete Ringkammer in zwei Kammern unterteilt, von denen eine die besagte Einstellkammer 15 und eine andere eine Arbeitskammer 18 ist, durch deren Druckbeaufschlagung die Kolbenstange 17 eingefahren werden kann. Die genannte Arbeitskammer 18 kann über einen Fluidkanal durch die Kolbenstange 17 hindurch versorgt werden bzw. Druckfluid ablassen, während die Einstellkammer 15 über einen Fluidkanal im Zylindermantel oder -boden an das Fluidsysten angebunden werden kann.

Um den Einschwenkzylinder 11 bzw. dessen Kolbenstange 17 auszufahren, kann die Arbeitskammer 19 druckbeaufschlagt werden, die auf der dem Schwimmkolben 12 gegenüberliegenden Seite des Arbeitskolbens 14 vorgesehen ist. Diese Arbeitskammer 19 kann als Vollquerschnittskammer ausgebildet sein, vgl. Figur 4.

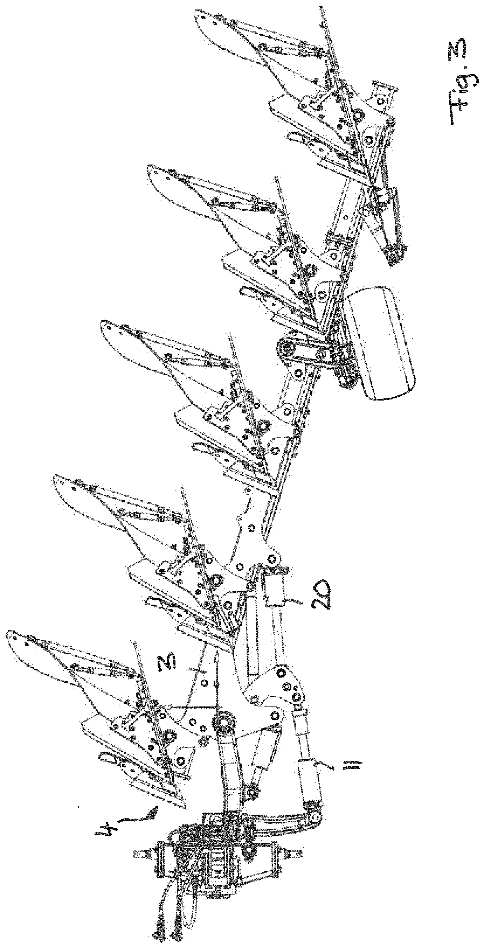

Die Schwimmkolbensteuerung 16 kann die Stellung des Schwimmkolbens 12 in Abhängigkeit einer eingestellten Schnittbreite steuern und damit den Einschwenkweg des Einschwenkzylinders 11 an die jeweils gewählte Schnittbreite anpassen. Insbesondere kann die Schwimmkolbensteuerung 16 dazu ausgebildet sein, den Einschwenkweg in die Wendestellung zunehmend, stufenlos oder stufenweise zu verkürzen, wenn kleinere Schnittbreiten eingestellt werden. Je kleiner die Schnittbreite eingestellt ist, desto eher droht eine Kollision mit dem Anbau- bzw. Wendebock, vgl. Figur 3. Um einerseits den Pflugrahmen 3 für den Wendevorgang ausreichend einzuschwenken, andererseits aber eine Kollision zu verhindern, kann über den Schwimmkolben 12 der Einschwenkzylinder hinsichtlich seines Einschwenk-Stellwegs zunehmend verkürzt werden, je kleiner die Schnittbreite eingestellt wird.

Die Schwimmkolbensteuerung 16 kann hierzu eine hydraulische Ankopplung der Einstellkammer 15 an den Schnittbreitenzylinder 20 umfassen. Die genannte hydraulische Ankopplung der Einstellkammer 15 an den Schnittbreitenzylinder 20 ist dabei insbesondere derart getroffen, dass Druckmittel, das bei einem Verstellen des Schnittbreitenzylinders 20 zum Verkleinern der Schnittbreite aus dem Schnittbreitenzylinder verdrängt wird, zu einer Erhöhung der Druckmittelmenge in der Einstellkammer 15 des Einschwenkzylinders 11 führt, um den Einschwenk-Stellweg des Einschwenkzylinders 11 entsprechend zu verkürzen.

Beispielsweise kann das aus dem Schnittbreitenzylinder 20 beim Verkleinern der Schnittbreite verdrängte Druckmittel direkt in die besagte Einstellkammer 15 gespeist werden, vgl. Figur 4.

Wie die Figuren 1 bis 3 zeigen, kann der Schnittbreitenzylinder 20 derart verbaut sein, dass ein Ausfahren des Schnittbreitenzylinders zu einer kleineren Schnittbreite führt, während ein Einfahren des Schnittbreitenzylinders 20 die Schnittbreite vergrößert, vgl. vergleichend Figur 1 und 2.

Bei einer solchen Anordnung des Schnittbreitenzylinders 20 kann die Ringkammer des Schnittbreitenzylinders 20, die sich beim Ausfahren der Kolbenstange 21 zum Verkleinern der Schnittbreite verkleinert, an die Einstellkammer 15 des Einschwenkzylinders 11 angekoppelt sein, insbesondere damit strömungsverbunden sein.

Wie Figur 4 zeigt, kann die Strömungsverbindung zwischen dem Schnittbreitenzylinder 20 und dem Einschwenkzylinder 11 mit einem oder mehreren Rückschlagventilen, insbesondere Drosselrückschlagventilen 22 beschaltet sein, um die für eine bestimmte Schnittbreite in die Einstellkammer 15 beförderte Druckmittelmenge stabil zu halten.

Wird beispielsweise der Schnittbreitenzylinder 20 vom Druckanschluss A her mit Druck beaufschlagt, um weiter auszufahren und hierdurch die Schnittbreite zu verkleinern, öffnet das Drosselrückschlagventil 22 durch den Druck vom Anschluss A her beide Rückschlagelemente, sodass das aus der Ringkammer des Schnittbreitenzylinders 20 verdrängte Öl ablaufen kann und über die Druckleitungsanschlüsse B auch am Einschwenkzylinder 11 anliegt. Genauer gesagt drückt das vom Anschluss B herkommende Druckmittel das Drosselrückschlagventil 22 auf, das einerseits mit der Einstellkammer 15 und andererseits mit der Arbeitskammer 18 verbunden ist, sodass einerseits das aus dem Schnittbreitenzylinder 20 verdrängte Druckmittel in die Einstellkammer 15 strömen kann und andererseits aus der Arbeitskammer 18 des Einschwenkzylinders 11 verdrängtes Druckmittel ablaufen kann.

Wird für den Wendevorgang der Einschwenkzylinder 11 druckbeaufschlagt, genauer gesagt dessen Arbeitskolben 14 von der Einschwenkkammer 19 her, fährt die Kolbenstange 17 mit dem daran befestigten Arbeitskolben 14 aus, also gemäß Figur 4 nach rechts, wobei die Einstellkammer 15 über das Drosselrückschlagventil 22 abgesperrt bleibt. Aus der Ring-Arbeitskammer 18 wird das Druckmittel abgeleitet, wobei ein Abfluss über das zweite Drosselrückschlagventil 22 möglich ist, welches durch den Druck geöffnet wird, der in der Betätigungsleitung vom Druckanschluss M her herrscht.

Der Arbeitskolben 14 fährt beim genannten Einschwenkvorgang am Schwimmkolben 12 an, der als verstellbarer Anschlag dient und die Wendestellung des Pflugrahmens 3 einstellt und fixiert.

Soll nach dem Wendevorgang der Einschwenkzylinder 11 wieder eingefahren werden, wird vom Druckanschluss S her Druck in die Ring-Arbeitskammer 18 gegeben, wodurch der Arbeitskolben 14 wieder vom Schwimmkolben 12 weggedrückt wird. Der Arbeitskolben 14 bzw. der Kammerdruck stützt sich dabei über den Schwimmkolben 12 und die Einstellkammer 15 ab. Letztere bleibt blockiert, da das Drosselrückschlagventil nicht öffnet.

Die hydraulisch miteinander gekoppelten Einstellkammer 15 und die Ringkammer des Schnittbreitenzylinders 20 können gleiche Querschnittsflächen besitzen, sodass die Summe der Stellwege des Schnittbreitenzylinders 20 und des Einschwenkzylinders 11 sozusagen gleichbleiben. Wird der Schnittbreitenzylinder 20 ausgefahren und hierdurch die Schnittbreite verkleinert, wird der Stellweg des Einschwenkzylinders 11 um den Betrag verkleinert, um den der Schnittbreitenzylinder 20 ausgefahren wird. Die Schwimmkolbensteuerung 16 kann also dazu ausgebildet sein, einen Stellweg des Schnittbreitenaktors eins zu eins in einen Stellweg des Schwimmkolbens umzusetzen. Grundsätzlich können aber auch andere Verhältnisse der genannten Stellwege vorgesehen werden, sodass ein Stellweg des Schnittbreitenzylinders in eine Verstellung der Schwimmkolbenlage untersetzt oder übersetzt wird.

## Patentansprüche

1. Anbaudrehpflug mit einem Anbaubock (2) zum Anbau an einen Schlepper, einem Pflugrahmen (3), der zwei Pflugscharreihen trägt und um eine liegende Wendeachse (5) drehbar ist, wobei die Pflugscharreihen durch einen Schnittbreitenaktor (20) in ihrer Schnittbreite verstellbar sind und der Pflugrahmen (3) an einem Wendebock (6), der um die genannte liegende Wendeachse (5) schwenkbar am Anbaubock (2) gelagert ist, um eine Einschwenkachse (8) quer zur Wendeachse (5) einschwenkbar gelagert und durch einen Einschwenkzylinder (11) für den Wendevorgang in eine Wendestellung mit verringerter Querausladung einschwenkbar ist, wobei der genannte Einschwenkzylinder (11) für verschiedene Schnittbreiten in verschiedene Hubstellungen zum Erreichen der jeweils gewünschten Wendestellung steuerbar ist, **dadurch gekennzeichnet, dass** der Einschwenkzylinder (11) zusätzlich zu einem Arbeitskolben (14) zum Einschwenken des Pflugrahmens (3) in die Wendestellung einen Schwimmkolben (12) zum Begrenzen des Stellwegs des Arbeitskolbens (14) zum Einstellen der Wendestellung aufweist, wobei eine Einstellkammer (15) zum Einstellen der Schwimmkolbenlage relativ zum Arbeitskolben (14) oder zu einem Zylinderboden vorgesehen ist, deren Befüllung mit Druckmittel von einer Schwimmkolbensteuerung (16) in Abhängigkeit der Einstellung des Schnittbreitenaktors (20) gesteuert ist.

2. Anbaudrehpflug nach dem vorhergehenden Anspruch, wobei die Schwimmkolbensteuerung (16) eine hydraulische Kopplung (23) der Einstellkammer (15) des Einschwenkzylinders (11) an den Schnittbreitenaktor (20) umfasst, wobei die genannte hydraulische Kopplung dazu ausgebildet ist, dass aus dem Schnittbreitenaktor (20) beim Verkleinern der Schnittbreite verdrängtes Druckmittel eine Befüllung der Einstellkammer (15) mit Druckmittel erzwingt.

3. Anbaudrehpflug nach dem vorhergehenden Anspruch, wobei die hydraulische Kopplung (23) eine direkte Strömungsverbindung zwischen einer Druckmittelkammer des Schnittbreitenaktors (20), die sich beim Verkleinern der Schnittbreite verkleinert, und der Einstellkammer (15) des Einschwenkzylinders (11) aufweist.

4. Anbaudrehpflug nach einem der beiden vorhergehenden Ansprüche, wobei zumindest ein Rückschlagventil, insbesondere Drosselrückschlagventil (22), zum Steuern der Strömungsverbindung zwischen der Einstellkammer (15) und dem Schnittbreitenaktor (20) vorgesehen und derart ausgebildet ist, dass ein Druckmittelabfluss aus der Einstellkammer (15) beim Betätigen des Einschwenkzylinders (11) zum Einschwenken des Pflugrahmens (3) unterbunden ist.

5. Anbaudrehpflug nach einem der vorhergehenden Ansprüche, wobei die Schwimmkolbensteuerung (16) dazu ausgebildet ist, den Stellweg des Einschwenkzylinders (11) in die Wendestellung für kleinere Schnittbreiten zu verkürzen und für größere Schnittbreiten zu verlängern, vorzugsweise dergestalt, dass für zunehmend kleiner werdende Schnittbreiten der Stellweg des Einschwenkzylinders (11) in die Wendestellung stufenlos oder stufenweise verkürzt wird.

6. Anbaudrehpflug nach einem der vorhergehenden Ansprüche, wobei die Schwimmkolbensteuerung (16) dazu ausgebildet ist, einen Stellweg des Schnittbreitenaktors (20) 1:1 in einen Stellweg des Schwimmkolbens (12) umzusetzen.

7. Anbaudrehpflug nach einem der vorhergehenden Ansprüche, wobei der Schwimmkolben (12) als Ringkolben ausgebildet ist und verschieblich auf einer Kolbenstange (17) sitzt, an der der Arbeitskolben (18) befestigt ist und zwei Ringkammern des Einschwenkzylinders (11) voneinander trennt, wobei eine der genannten Ringkammern die Einstellkammer (15) und eine andere der genannten Ringkammern eine Arbeitskammer zum Einfahren des Einschwenkzylinders (11) bildet.

8. Anbaudrehpflug nach dem vorhergehenden Anspruch, wobei die Einstellkammer (15) zwischen dem Schwimmkolben (12) und einem Zylinderboden angeordnet ist und die Arbeitskammer (18) zum Einfahren des Einschwenkzylinders (11) zwischen dem Schwimmkolben (12) und dem Arbeitskolben (14) angeordnet ist.

9. Anbaudrehpflug nach einem der vorhergehenden Ansprüche, wobei der Einschwenkzylinder (11) mit seiner Druckmittelversorgung zum Verstellen des Arbeitskolbens (14) an die Druckmittelversorgung eines Wendeaktors zum Wenden des Pflugs angebunden ist derart, dass bei Druckbeaufschlagung des Wendeaktors (7) der Einschwenkzylinder (11) mit Druckmittel beaufschlagt wird.

10. Anbaudrehpflug nach einem der vorhergehenden Ansprüche, wobei der Schnittbreitenaktor (20) zum Verstellen der Schnittbreite bei Betätigung des Einschwenkzylinders (11) deaktiviert ist.

11. Anbaudrehpflug nach einem der vorhergehenden Ansprüche, wobei der Pflugrahmen (3) an dem Wendebock (6) über ein Anlenkgetriebe (9) verschwenkbar angelenkt ist, das zumindest einen Anlenkträger (10) aufweist, der an dem Wendebock (6) einerseits und an dem Pflugrahmen (3) oder einem Zwischenrahmen andererseits gelenkig angelenkt ist.

12. Anbaudrehpflug nach dem vorhergehenden Anspruch, wobei der Einschwenkzylinder zusammen mit dem vorgenannten Anlenkträger (10) einen mehrgelenkigen Teil des Anlenkgetriebes (9), insbesondere ein Viergelenk, bildet.

13. Anbaudrehpflug nach einem der beiden vorhergehenden Ansprüche, wobei das Anlenkgetriebe (9) zumindest eine zusätzlich zu dem Einschwenkzylinder (11) betätigbare Verstellbarkeit aufweist.

## Claims

1. Mounted reversible plough with a headstock (2) for attachment to a tractor, a plough frame (3) which carries two rows of ploughshares and is rotatable about a horizontal reversing axle (5), wherein the rows of ploughshares are adjustable in their cutting width by a cutting width actuator (20), and the plough frame (3) is mounted on a reversing block (6), which is pivotably mounted on the headstock (2) about the horizontal reversing axle (5), is mounted to be pivotable inward transversely to the reversing axle (5) about an inward-pivot axle (8) and pivotable inward into a reversing position with reduced transverse outreach by an inward-pivot cylinder (11) for the reversing operation, wherein said inward-pivot cylinder (11) is controllable for different cutting widths into different stroke positions for reaching the respectively desired reversing position, **characterized in that** the inward-pivot cylinder (11) has, in addition to a working piston (14) for pivoting the plough frame (3) into the reversing position, a floating piston (12) for limiting the adjustment travel of the working piston (14) for setting the reversing position, wherein a setting chamber (15) is provided for setting the floating piston position relative to the working piston (14) or to a cylinder bottom, the filling of which with pressure medium is controlled by a floating piston control (16) as a function of the setting of the cutting width actuator (20).

2. Mounted reversible plough according to the preceding claim, wherein the floating piston control (16) comprises a hydraulic coupling (23) of the setting chamber (15) of the inward-pivot cylinder (11) to the cutting width actuator (20), wherein said hydraulic coupling is designed in such a way that pressure medium displaced from the cutting width actuator (20) during reduction of the cutting width forces the setting chamber (15) to be filled with pressure medium.

3. Mounted reversible plough according to the preceding claim, wherein the hydraulic coupling (23) has a direct flow connection between a pressure medium chamber of the cutting width actuator (20), which is reduced when the cutting width is reduced, and the setting chamber (15) of the inward-pivot cylinder (11).

4. Mounted reversible plough according to one of the two preceding claims, wherein at least one non-return valve, in particular a non-return throttle valve (22), is provided for controlling the flow connection between the setting chamber (15) and the cutting width actuator (20) and is designed in such a way that a pressure medium outflow from the setting chamber (15) is suppressed when the inward-pivot cylinder (11) is actuated for inward-pivoting of the plough frame (3).

5. Mounted reversible plough according to one of the preceding claims, wherein the floating piston control (16) is configured to shorten the adjustment travel of the inward-pivot cylinder (11) into the reversing position for smaller cutting widths and to lengthen it for larger cutting widths, preferably in such a way that the adjustment travel of the inward-pivot cylinder (11) into the reversing position is shortened continuously or gradually for increasingly smaller cutting widths.

6. Mounted reversible plough according to one of the preceding claims, wherein the floating piston control (16) is configured to convert an adjustment travel of the cutting width actuator (20) 1:1 into an adjustment travel of the floating piston (12).

7. Mounted reversible plough according to one of the preceding claims, wherein the floating piston (12) is designed as an annular piston and sits displaceably on a piston rod (17), to which the working piston (18) is fastened and separates two annular chambers of the inward-pivot cylinder (11) from one another, wherein one of said annular chambers forms the setting chamber (15) and another of said annular chambers forms a working chamber for retracting the inward-pivot cylinder (11).

8. Mounted reversible plough according to the preceding claim, wherein the setting chamber (15) is arranged between the floating piston (12) and a cylinder bottom and the working chamber (18) for retracting the inward-pivot cylinder (11) is arranged between the floating piston (12) and the working piston (14).

9. Mounted reversible plough according to one of the preceding claims, wherein the inward-pivot cylinder (11) is connected with its pressure medium supply for adjusting the working piston (14) to the pressure medium supply of a reversing actuator for reversing the plough in such a way that when pressure is applied to the reversing actuator (7), the inward-pivot cylinder (11) is applied with pressure medium.

10. Mounted reversible plough according to one of the preceding claims, wherein the cutting width actuator (20) for adjusting the cutting width is deactivated when the inward-pivot cylinder (11) is actuated.

11. Mounted reversible plough according to one of the preceding claims, wherein the plough frame (3) is pivotably articulated to the reversing block (6) via an linkage gearbox (9), which has at least one articulation carrier (10), which is articulated to the reversing block (6) on the one hand and to the plough frame (3) or an intermediate frame on the other hand.

12. Mounted reversible plough according to the preceding claim, wherein the inward-pivot cylinder together with the aforementioned articulation carrier (10) forms a multi-jointed part of the linkage gearbox (9), in particular a four-bar linkage.

13. Mounted reversible plough according to one of the two preceding claims, wherein the linkage gearbox (9) has at least one adjusting element, which can be actuated in addition to the inward-pivot cylinder (11).

## Revendications

1. Charrue réversible portée comprenant un support de montage (2) destiné à être monté sur un tracteur, un châssis de charrue (3) qui porte deux rangées de socs de charrue et qui peut tourner autour d'un axe de retournement horizontal (5), les rangées de socs de charrue étant réglables dans leur largeur de coupe par un actionneur de largeur de coupe (20) et le châssis de charrue (3) étant monté sur un support de retournement (6), qui est monté sur le support de montage (2) de manière à pouvoir pivoter autour dudit axe de retournement horizontal (5), de manière à pouvoir pivoter autour d'un axe de pivotement (8) transversal à l'axe de retournement (5) et pouvant être pivoté par un vérin de pivotement (11) pour l'opération de retournement dans une position de retournement avec une portée transversale réduite, ledit vérin de pivotement (11) pouvant être commandé pour différentes largeurs de coupe dans différentes positions de course pour atteindre la position de retournement respectivement souhaitée, **caractérisé en ce que** le vérin de pivotement (11) présente, en plus d'un piston de travail (14) pour faire pivoter le châssis de charrue (3) dans la position de retournement, un piston flottant (12) pour limiter la course de réglage du piston de travail (14) pour régler la position de retournement, une chambre de réglage (15) étant prévue pour régler la position du piston flottant par rapport au piston de travail (14) ou à un fond de vérin, dont le remplissage en fluide sous pression est commandé par une commande de piston flottant (16) en fonction du réglage de l'actionneur de largeur de coupe (20).

2. Charrue réversible portée selon la revendication précédente, dans laquelle la commande de piston flottant (16) comprend un couplage hydraulique (23) de la chambre de réglage (15) du vérin de pivotement (11) à l'actionneur de largeur de coupe (20), ledit couplage hydraulique étant configuré pour que le fluide sous pression déplacé de l'actionneur de largeur de coupe (20) lors de la réduction de la largeur de coupe force un remplissage de la chambre de réglage (15) avec du fluide sous pression.

3. Charrue réversible portée selon la revendication précédente, dans laquelle le couplage hydraulique (23) présente une liaison d'écoulement directe entre une chambre de fluide sous pression de l'actionneur de largeur de coupe (20), qui diminue lors de la réduction de la largeur de coupe, et la chambre de réglage (15) du vérin de pivotement (11).

4. Charrue réversible portée selon l'une quelconque des deux revendications précédentes, dans laquelle au moins un clapet anti-retour, notamment un clapet anti-retour à étranglement (22), est prévu pour commander la liaison d'écoulement entre la chambre de réglage (15) et l'actionneur de largeur de coupe (20) et est configuré de telle sorte qu'un écoulement de fluide sous pression hors de la chambre de réglage (15) est empêché lors de l'actionnement du vérin de pivotement (11) pour faire pivoter le châssis de charrue (3).

5. Charrue réversible portée selon l'une quelconque des revendications précédentes, dans laquelle la commande à piston flottant (16) est configurée pour raccourcir la course de réglage du vérin de pivotement (11) dans la position de retournement pour les petites largeurs de coupe et pour l'allonger pour les grandes largeurs de coupe, de préférence de telle sorte que la course de réglage du vérin de pivotement (11) dans la position de retournement est raccourcie progressivement ou par paliers pour des largeurs de coupe de plus en plus petites.

6. Charrue réversible portée selon l'une quelconque des revendications précédentes, dans laquelle la commande de piston flottant (16) est configurée pour convertir une course de réglage de l'actionneur de largeur de coupe (20) 1:1 en une course de réglage du piston flottant (12).

7. Charrue réversible portée selon l'une quelconque des revendications précédentes, dans laquelle le piston flottant (12) est configuré sous forme de piston annulaire et est monté coulissant sur une tige de piston (17) à laquelle est fixé le piston de travail (18) et sépare deux chambres annulaires du vérin de pivotement (11), l'une desdites chambres annulaires formant la chambre de réglage (15) et une autre desdites chambres annulaires formant une chambre de travail pour la rentrée du vérin de pivotement (11).

8. Charrue réversible portée selon la revendication précédente, dans laquelle la chambre de réglage (15) est agencée entre le piston flottant (12) et un fond de vérin et la chambre de travail (18) pour la rentrée du vérin de pivotement (11) est agencée entre le piston flottant (12) et le piston de travail (14).

9. Charrue réversible portée selon l'une quelconque des revendications précédentes, dans laquelle le vérin de pivotement (11) est relié par son alimentation en fluide sous pression pour le réglage du piston de travail (14) à l'alimentation en fluide sous pression d'un actionneur de retournement de la charrue, de telle sorte que lorsque l'actionneur de retournement (7) est mis sous pression, le vérin de pivotement (11) est alimenté en fluide sous pression.

10. Charrue réversible portée selon l'une quelconque des revendications précédentes, dans laquelle l'actionneur de largeur de travail (20) est désactivé pour régler la largeur de coupe lors de l'actionnement du vérin de pivotement (11).

11. Charrue réversible portée selon l'une quelconque des revendications précédentes, dans laquelle le châssis de charrue (3) est articulé en pivotement sur le support de retournement (6) par l'intermédiaire d'un mécanisme d'articulation (9) qui présente au moins un support d'articulation (10) articulé d'une part sur le support de retournement (6) et d'autre part sur le châssis de charrue (3) ou un châssis intermédiaire.

12. Charrue réversible portée selon la revendication précédente, dans laquelle le vérin de pivotement forme, conjointement avec le support d'articulation (10) précité, une partie à plusieurs articulations du mécanisme d'articulation (9), notamment un quadrilatère articulé.

13. Charrue réversible portée selon l'une quelconque des deux revendications précédentes, dans laquelle le mécanisme d'articulation (9) présente au moins une possibilité de réglage pouvant être actionnée en plus du vérin de pivotement (11).
